# FASCICULE DE BREVET EUROPEEN

(11) **EP 0 416 672 B1**
(45) Date de publication et mention de la délivrance du brevet: **26.07.1995**
(21) Numéro de dépôt: 90202100.5
(22) Date de dépôt: 02.08.1990
(51) Int. Cl.: C08G 61/12, H01B 1/12

(54) **Compositions de polymères conducteurs d'électricité dérivés de pyrrole substitué ou non et procédé pour leur obtention**
Elektrisch leitfähige Polymermischungen, abgeleitet von substituierten oder unsubstituierten Pyrrolen, und Verfahren zu ihrer Herstellung
Electrically conductive polymer compositions containing substituted or unsubstituted pyrroles and process for their preparation

(30) Priorité: 14.08.1989 FR 8910951
(43) Date de publication de la demande: 13.03.1991
(73) Titulaire: SOLVAY (Société Anonyme), B-1050 Bruxelles (BE)
(72) Inventeur: Hannecart, Etienne, B-1980 Tervuren (BE); Destryker, Elise, B-1600 Sint-Pieters-Leeuw (BE)
(74) Mandataire: Nichels, William

(56) Documents cités:
- EP-A- 0 129 070
- DE-A- 3 640 205
- US-A- 4 697 000
- MAKROMOLEKULARE CHEMIE vol. 5, no. 3, mars 1984, pages 157-164, Heidelberg, DE; W. WERNET et al.: "A new series of conducting polymers with layered structure: Polypyrrole n-alkylsulfates and n-alkylsulfonates"
- JOURNAL OF COLLOID AND INTERFACE SCIENCE vol. 118, no. 2, août 1987, pages 411-416, Academic Press, Inc.; S.P. ARMES et al.: "Aqueous Dispersions of Electrically Conducting Monodisperse Polypyrrole Particles"

## Description

La présente invention concerne des compositions de polymères conducteurs d'électricité dérivés de polymères de pyrroles, substitués ou non, contenant des groupements ioniques formés par un groupement alkyle-sulfate. L'invention concerne également un procédé pour la préparation de ces compositions par polymérisation chimique du pyrrole et/ou du pyrrole substitué en présence de tels groupements ioniques.

Dans le brevet US 4,697,000 (Rockwell International Corporation) on a proposé un procédé pour la préparation de polymères conducteurs d'électricité dans lequel du pyrrole liquide est traité avec une solution d'un agent oxydant, choisi parmi les cations Fe³⁺, en présence d'un anion dopant tel qu'un anion sulfate organique (dodécylsulfate). Ces documents "Makromol. Chem., Rapid Commun.5, 157 (1984) et EP 129070 décrivent des compositions comprenant le polypyrrole qui comporte des anions sulfate organiques de la formule CH₃(CH₂)ₙ SO₄⁻ (n=3-17).

Toutefois certaines applications électriques, telles que la réalisation de systèmes de stockage électrochimiques de type capacités ou condensateurs à haute densité d'énergie et à grande durée de cyclage, exigent des polymères conducteurs aux propriétés particulières présentant des morphologies élaborées.

Ces propriétés particulières sont notamment une grande énergie massique et volumique pour les utilisations dans des sources d'énergie alimentant des systèmes portables, une durée de vie élevée du type pseudo-capacitif, une bonne résistance du polymère face au vieillissement dans une large gamme de température et de conditions de stockage.

La morphologie élaborée quant à elle est caractérisée notamment par un volume poreux important et une distribution des tailles des pores adéquates.

La présente invention vise à fournir des nouvelles compositions de polymères conducteurs d'électricité à base de pyrrole qui présentent les propriétés particulières susmentionnées.

L'invention concerne à cet effet une composition comprenant un polymère conducteur d'électricité, choisi parmi du polypyrrole et/ou du polypyrrole substitué, et des groupements ioniques qui comportent au moins un groupement alkyle-sulfate, l'alkyle étant une chaîne aliphatique saturée, ramifiée ou non et comprenant 8 atomes de carbone.

Par polypyrrole et/ou polypyrrole substitué, on entend tous les polymères issus du pyrrole et/ou de pyrroles substitués, c'est-à-dire les homopolymères et les copolymères comportant des unités de pyrrole ou de pyrrole substitué. Parmi les pyrroles substitués, on entend habituellement les pyrroles substitués en position 3 ou 3 et 4 et le N-méthylpyrrole. Les meilleurs résultats ont été obtenus avec le pyrrole non substitué.

Par composé ionique contenant un groupement alkyle-sulfate, on entend tout composé organique ou inorganique susceptible de donner de tels groupements alkyle-sulfate. Généralement il provient d'un sel d'alkyle-sulfate. Habituellement il provient d'un sel de métal alcalin ou alcalino-terreux, un sel de phosphonium, un sel d'ammonium ou dérivé d'une amine. De manière préférée il provient d'un sel de métal alcalin. De manière particulièrement préférée il provient d'un sel de sodium.

Par groupement alkyle-sulfate, dont le groupement alkyle est une chaîne aliphatique saturée, ramifiée ou non, comprenant 8 atomes de carbone, on entend de manière préférée le groupement octylsulfate non ramifié et le groupement éthyl-2 hexylsulfate. Les meilleurs résultats ont été obtenus avec le groupement éthyl-2 hexylsulfate.

Les compositions selon l'invention contiennent habituellement 0,01 à 0,9 partie de composé ionique contenant un groupement alkyle-sulfate par partie de pyrrole et/ou de pyrrole substitué et de préférence 0,05 à 0,5 et de manière particulièrement préférée 0,05 à 0,4.

Les compositions selon l'invention peuvent avantageusement contenir d'autres groupements ioniques, tels que d'origine organique ou inorganique. Habituellement elles contiennent comme groupement inorganique un chlorure, un sulfate ou un nitrate et comme groupement organique des groupements du type : trichloroacétate, phénylphosphonate, glycérol-2-phosphate, pentadécylsulfonate, hexadécylsulfonate, polyvinylsulfonate, polystyrènesulfonate, dodécylbenzènesulfonate, tosylate, trifluorométhanesulfonate, dodécylsulfate. De manière préférée, elles contiennent un groupement inorganique. Les meilleurs résultats ont été obtenus lorsque la composition contient en outre un groupement chlorure.

Le volume poreux des compositions selon l'invention est habituellement supérieur à 1 cm³.g⁻¹ et est de préférence compris entre 1,5 et 5 cm³.g⁻¹. Les meilleurs résultats ont été obtenus avec une composition selon l'invention ayant un volume poreux supérieur à 3,5 cm³.g⁻¹.

La présente invention concerne également un procédé pour la préparation des compositions selon l'invention.

A cet effet l'invention concerne un procédé pour la préparation d'une composition comprenant un polymère conducteur d'électricité choisi parmi du polypyrrole et/ou du polypyrrole substitué par polymérisation chimique du pyrrole et/ou du pyrrole substitué dans un milieu réactionnel aqueux comprenant un composé ionique comportant un groupement alkyle-sulfate, l'alkyle étant une chaîne aliphatique saturée, ramifiée ou non, comprenant 8 atomes de carbone.

Généralement on met en oeuvre 0,03 à 3 moles du composé ionique comportant un groupement alkyle-sulfate par mole de pyrrole et/ou de pyrrole substitué, habituellement 0,05 à 1,5 mole et de manière préférée 0,10 à 0,60 mole.

Dans le milieu réactionnel on met également en oeuvre un sel ferrique. Généralement on met en oeuvre un sel ferrique organique ou inorganique. Habituellement on met en oeuvre comme sel ferrique inorganique un chlorure, un sulfate ou un nitrate et comme sel ferrique organique des composés du type : trichloroacétate, phénylphosphonate, glycérol-2-phosphate, pentadécylsulfonate, hexadécylsulfonate, polyvinylsulfonate, polystyrènesulfonate, dodécylbenzènesulfonate, tosylate, trifluorométhanesulfonate, dodécylsulfate. De manière préférée, on met en oeuvre un sel inorganique de fer et tout particulièrement préféré est le chlorure ferrique.

Généralement on met en oeuvre 0,3 à 5 moles de sel ferrique par mole de pyrrole et/ou de pyrrole substitué. De bons résultats ont été obtenus avec des concentrations comprises entre 2 et 3 moles de sel ferrique par mole de pyrrole et/ou de pyrrole substitué.

Le procédé selon l'invention s'opère de préférence en milieu aqueux, mais la quantité d'eau nécessaire peut varier entre de larges limites et dépend essentiellement des autres composants.

La température à laquelle est réalisé le procédé est généralement comprise entre 0 et 50°C et de préférence entre 5 et 40°C lorsqu'on opère à pression atmosphérique.

La pression à laquelle est réalisé le procédé n'est pas critique en soi. Elle est généralement comprise entre 0,1 et 10 bars et de préférence elle est égale à la pression atmosphérique.

Le procédé selon l'invention peut être réalisé dans tout appareillage ou tout réacteur permettant de réunir les conditions opératoires décrites ci-avant.

Les compositions de l'invention peuvent être utilisées pour leurs propriétés de conductivité électrique, d'absorption électromagnétique et de conductivité thermique et plus particulièrement pour la réalisation de dispositifs électroconducteurs.

La composition comprenant un polymère conducteur d'électricité selon l'invention peut être dopée par des cations ou des anions pendant la charge ou la décharge du système, les cations ou les anions proviennent de l'électrolyte.

Les électrolytes sont généralement choisis parmi les sels conducteurs de formule C⁺A⁻ dans laquelle C⁺ est un cation et dans laquelle A⁻ est un anion.

Le cation C⁺ est choisi habituellement parmi les ions ammonium, alcalino-terreux ou alcalins, les ions R₄N⁺ et R₄P⁺ (R étant un radical alkyle, tel que les radicaux éthyle et butyle par exemple) et de préférence parmi les cations Li⁺, Na⁺ ou K⁺, ou des ions complexes tels que (Bu)₄N⁺ ou (Et)₄N⁺, mis en oeuvre de manière préférée sous la forme de LiClO₄, KPF₆, (Bu)₄NClO₄ et (Et)₄NClO₄ en solution dans un solvant tel que l'acétonitrile, le tétrahydrofurane ou le carbonate de propylène.

L'anion A⁻ est choisi parmi les ions ClO₄⁻, AsF₆⁻, SbF₆⁻, SO₄²⁻, C₆H₅SO₃⁻, BF₄⁻, PF₆⁻, CF₃SO₃⁻, I₃⁻, Br⁻ et NO₃⁻. Les meilleurs résultats ont été obtenus avec l'ion ClO₄⁻.

Les compositions selon l'invention peuvent avantageusement être utilisées dans des systèmes de stockage électrochimiques de type capacités ou condensateurs à haute densité d'énergie et grande durée de cyclage. Les condensateurs sont constitués de deux électrodes séparées par un électrolyte, au moins une des deux électrodes est constituée de la composition comprenant un polymère conducteur d'électricité selon l'invention. Ces condensateurs électrochimiques de haute énergie spécifique peuvent être des condensateurs symétriques (les deux électrodes sont identiques) ou dissymétriques (les deux électrodes sont de nature différente).

Dans le cas de condensateur dissymétrique, la contre-électrode est formée soit par un polymère conducteur différent, soit par un métal alcalin ou un composé d'insertion. La contre-électrode peut être formée par un polymère dopé p tel que notamment les autres polymères conducteurs d'électricité à base de polypyrroles, substitués ou non, de polythiophènes, substitués ou non, de polyacétylène, de polyphénylène ou de polymère d'aniline.

La composition comprenant un polymère conducteur selon l'invention peut être également utilisée dans la réalisation de batteries rechargeables, de générateur, de pile ou d'accumulateur électrique dont les anodes (respectivement les cathodes) sont constituées d'électrodes constituées par ou revêtues de films formés par ces compositions, selon l'invention, dopées par des anions (respectivement des cations).

L'invention est illustrée par les exemples suivants :

### Exemple 1

Dans un ballon à 4 cols de 4000 ml, on introduit sous atmosphère d'azote 750 ml d'eau et 15 ml (0,22 mole) de pyrrole.

Au milieu réactionnel ainsi obtenu, on ajoute, sous agitation à 20°C et en 15 minutes, 9,2 g (0,040 mole) d'éthyl-2 hexylsulfate de sodium (produit, dénommé sulfate sodique de 2 éthylhexanol, vendu par la Société Tensia sous la marque de commerce TENSATIL DEH.120) et 148 g (0,55 mole) de chlorure ferrique (FeCl₃.6H₂O), le tout dissous dans 250 ml d'eau.

Le ballon est maintenu 2 heures à 20°C sous agitation.

On filtre le polymère obtenu, puis on le lave 3 fois par 500 ml d'eau, 3 fois par 500 ml d'un mélange 50/50 d'eau et de méthanol puis 3 fois par 500 ml de méthanol.

Ensuite on sèche le polymère sous vide à 20°C et sous 2670 Pa (soit 20 mm Hg) durant une nuit.

On obtient une poudre noire avec un rendement - polymère calculé comme non dopé/monomère - d'environ 77 % en poids.

Cette poudre est pressée à 20°C durant quelques minutes sous une pression de 19,6.10⁷ Pa (soit 2 tonnes par cm²).

La plaquette obtenue a une conductivité de 38 S.cm⁻¹.

La composition élémentaire du polymère conducteur obtenu est C/H/N/Cl/S/Fe : 5,2/6,2/1/0,19/0,14/0,00 en atome-gramme.

Sa surface spécifique s'élève à 11 m²/g, son volume poreux à 4,33 cm³/g.

La composition comprenant le polymère conducteur contient 62% de polypyrrole.

### Exemple 2

On réalise un supercondensateur symétrique, les deux électrodes sont identiques et réalisées à partir de la composition telle qu'obtenue à l'exemple 1.

On sèche la composition sous vide (26,7 Pa, soit 0,2 mm Hg) à 50°C durant 15 heures.

Ensuite on presse cette composition à 20 °C durant 20 secondes sous une pression de 6,4.10⁷ Pa (soit 650 kg par cm²).

Puis on imprègne la pastille ainsi obtenue par l'électrolyte constitué par du LiClO₄ (1M) en solution dans du carbonate de propylène. Le diamètre de la pastille est de 14 mm, cette pastille forme l'électrode et est constituée par 80 mg de polypyrrole dopé.

Le séparateur électrolytique est constitué par un feutre de polyamide imprégné d'électrolyte; ce feutre sert aussi de réserve d'électrolyte.

Les deux électrodes et le séparateur électrolytique sont empilés et montés dans un boitier en nickel de diamètre de 20 mm et d'épaisseur de 2 mm. L'étanchéité est assurée après sertissage par un joint en polypropylène. Ces opérations se font en atmosphère anhydre à température ambiante. On obtient ainsi un élément ayant les caractéristiques détaillées ci-après.

Les résistances série et de transfert mesurées en impédance complexe entre 65 KHz et 0,1 Hz sont respectivement égales à 12 Ω et 70 Ω.

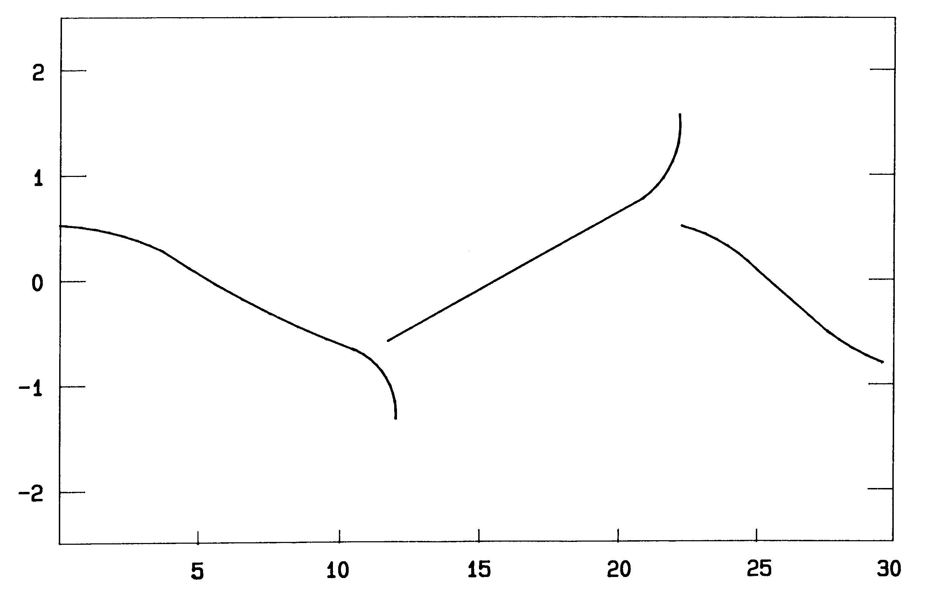

Une courbe de cyclage de ce condensateur entre - 1,5 V et + 1,5 V sous 500 »A à 25°C. est représentée à la figure 1. Dans cette figure le temps en heure est représenté en abscisse, la tension en voit est représentée en ordonnée.

La capacité moyenne de l'élément est de 12,3 F; ce qui correspond à une capacité massique de l'électrode de 307 F/g d'électrode, soit 128 A.h/kg. d'électrode pour une différence de tension de fonctionnement de 1,5 V.

### Exemple 3

Dans un ballon à 4 cols de 4000 ml, on introduit sous atmosphère d'azote 750 ml d'eau et 15 ml (0,22 mole) de pyrrole.

Au milieu réactionnel ainsi obtenu, on ajoute, sous agitation à 20°C et en 15 minutes, 11,3 g (0,044 mole) d'octylsulfate de sodium (produit vendu par la Société HENKEL sous la marque de commerce TEXAPON 890) et 148 g (0,55 mole) de chlorure ferrique (FeCl₃.6H₂O), le tout étant dissous dans 250 ml d'eau.

Le ballon est maintenu 2 heures à 20°C sous agitation.

On filtre le polymère ainsi obtenu, puis on le lave 3 fois par 500 ml d'eau, 3 fois par 500 ml d'un mélange 50/50 d'eau et de méthanol puis 3 fois par 500 ml de méthanol.

Ensuite on sèche le polymère sous vide à 20°C et sous 2670 Pa (soit 20 mm Hg) durant une nuit.

On obtient une poudre noire avec un rendement - polymère calculé comme non dopé/monomère - d'environ 75 % en poids.

Cette poudre est pressée à 20°C durant quelques minutes sous une pression de 19,6.10⁷ Pa (soit 2 tonnes par cm²).

La plaquette obtenue a une conductivité de 40 S.cm⁻¹.

La composition élémentaire du polymère conducteur obtenu est C/H/N/Cl/S/Fe : 5,3/6,8/1/0,14/0,18/0,00 en atome-gramme.

Sa surface spécifique s'élève à 5 m²/g, son volume poreux à 2,04 cm³/g.

La composition comprenant le polymère conducteur contient 57% de polypyrrole.

### Exemple 4

On réalise un supercondensateur symétrique dont les deux électrodes sont identiques et réalisées à partir de la composition telle qu'obtenue à l'exemple 3.

On sèche la composition telle qu'obtenue à l'exemple 3 sous vide (26,7 Pa soit 0,2 mm Hg) à 50°C durant 15 heures.

Ensuite on presse cette composition à 20 °C durant 20 secondes sous une pression de 6,4.10⁷ Pa (soit 650 kg par cm²).

Puis on imprègne la pastille ainsi obtenue par l'électrolyte constitué par du LiClO₄ (1M) en solution dans du carbonate de propylène. Le diamètre de la pastille est de 14 mm, cette pastille forme l'électrode et est constituée par 75 mg de polypyrrole dopé.

Le séparateur électrolytique est constitué par un feutre de polyamide imprégné d'électrolyte; ce feutre sert aussi de réserve d'électrolyte.

Les deux électrodes et le séparateur électrolytique sont empilés et montés dans un boitier en nickel de diamètre de 20 mm et d'épaisseur de 2 mm. L'étanchéité est assurée après sertissage par un joint en polypropylène. Ces opérations se font en atmosphère anhydre à température ambiante. On obtient ainsi un élément ayant les caractéristiques détaillées ci-après.

Les résistances série et de transfert mesurées en impédance complexe entre 65 KHz et 0,1 Hz sont respectivement égales à 18 Ω et 60 Ω.

La capacité moyenne de l'élément est de 9,36 F; ce qui correspond à une capacité massique de l'électrode de 234 F/g d'électrode.

### Exemple 5

Dans un ballon à 4 cols de 4000 ml, on introduit sous atmosphère d'azote 750 ml d'eau et 15 ml (0,22 mole) de pyrrole.

Au milieu réactionnel ainsi obtenu, on ajoute, sous agitation à 20°C et en 15 minutes, 5 g (0,022 mole) d'éthyl-2 hexylsulfate de sodium (produit, vendu par la Société Tensia sous la marque de commerce TENSATIL DEH.120), 19 g (0,055 mole) de dodécylbenzène sulfonate de sodium, et 148 g (0,55 mole) de chlorure ferrique (FeCl₃.6H₂O), le tout étant dissous dans 250 ml d'eau.

Le ballon est maintenu 2 heures à 20°C sous agitation.

On filtre la composition de polymère ainsi obtenu, puis on la lave 3 fois par 500 ml d'eau, 3 fois par 500 ml d'un mélange 50/50 d'eau et de méthanol puis 3 fois par 500 ml de méthanol.

Ensuite on sèche cette composition sous vide à 20°C et sous 2670 Pa (soit 20 mm Hg) durant une nuit.

On obtient une poudre noire avec un rendement - polymère calculé comme non dopé/monomère - d'environ 89 % en poids.

La composition finale comprenant le polymère conducteur contient 44% de polypyrrole.

### Exemple 6

On réalise avec la composition telle qu'obtenue à l'exemple 5 un générateur rechargeable. L'électrode négative est formée de lithium pur, c'est un disque de lithium de 14 mm de diamètre et de 200 »m d'épaisseur.

L'électrode positive est réalisée à partir de la composition telle qu'obtenue ci-dessus.

Pour ce faire la composition est séchée sous vide (26,7 Pa soit 0,2 mm Hg) à 50°C durant 15 heures puis pressée à 20 °C durant 20 secondes sous une pression de 6,4.10⁷ Pa (soit 650 kg par cm²).
Puis on imprègne la pastille ainsi obtenue par l'électrolyte constitué par du LiClO₄ (1M) en solution dans du carbonate de propylène. Le diamètre de la pastille est de 14 mm, cette pastille forme l'électrode positive et contient 73 mg de polypyrrole dopé.

Le séparateur électrolytique est constitué par un feutre de polyamide imprégné d'électrolyte; ce feutre sert aussi de réserve d'électrolyte.

Les deux électrodes et le séparateur électrolytique sont pressés ensemble et montés dans un boîtier en nickel de diamètre de 20 mm et d'épaisseur de 2 mm. L'étanchéité est assurée après sertissage par un joint en polypropylène. Ces opérations se font dans une boîte à gants sous atmosphère d'argon à température ambiante. On obtient ainsi un élément ayant les caractéristiques détaillées ci-après.

Après montage la tension en circuit ouvert mesurée s'élève à 3,20 V.

Les résistances série et de transfert mesurées en impédance complexe entre 65 KHz et 0,1 Hz sont respectivement égales à 20 Ω et 900 Ω.

La capacité moyenne de l'élément restituée en décharge est de 5,4 mA.h, ce qui correspond à une capacité massique de l'électrode positive comprenant le dopant de 74 A.h/kg d'électrode.

## Revendications

1. Composition comprenant un polymère conducteur d'électricité choisi parmi du polypyrrole et/ou du polypyrrole substitué et des groupements ioniques caractérisée en ce que les groupements ioniques comportent au moins un groupement alkyle-sulfate, l'alkyle étant une chaîne aliphatique saturée, ramifiée ou non et comprenant 8 atomes de carbone.

2. Composition selon la revendication 1 caractérisée en ce que le groupement alkyle-sulfate est un groupement éthyl-2 hexylsulfate.

3. Composition selon la revendication 1 ou 2 caractérisée en ce que les groupements ioniques contiennent en outre un groupement chlorure.

4. Composition selon la revendication 1, 2 ou 3 caractérisée en ce que la composition a un volume poreux supérieur à 1 cm³ g⁻¹.

5. Procédé pour la préparation d'une composition comprenant un polymère conducteur d'électricité choisi parmi du polypyrrole et/ou du polypyrrole substitué par polymérisation chimique du pyrrole et/ou du pyrrole substitué dans un milieu réactionnel aqueux caractérisé en ce que le milieu réactionnel comprend un composé ionique comportant un groupement alkyle-sulfate, l'alkyle étant une chaîne aliphatique saturée, ramifiée ou non et comprenant 8 atomes de carbone.

6. Procédé selon la revendication 5 caractérisé en ce que le composé comportant un groupement alkyle-sulfate mis en oeuvre est un sel, tel qu'un sel de métal alcalin ou alcalino-terreux, un sel de phosphonium, un sel d'ammonium ou dérivé d'une amine.

7. Procédé selon la revendication 6, caractérisé en ce que le sel mis en oeuvre est le sel de sodium d'éthyle-2 hexylsulfate.

8. Procédé selon les revendications 5 à 7, caractérisé en ce que le milieu réactionnel comprend en outre un sel ferrique, tel que le chlorure ferrique.

## Claims

1. Composition comprising an electrically conductive polymer chosen from polypyrrole and/or substituted polypyrrole and ionic groups, characterized in that the ionic groups comprise at least one alkyl sulphate group, the alkyl being a saturated aliphatic chain, branched or otherwise and containing 8 carbon atoms.

2. Composition according to Claim 1, characterized in that the alkyl sulphate group is a 2-ethylhexylsulphate group.

3. Composition according to Claim 1 or 2, characterized in that the ionic groups additionally contain a chloride group.

4. Composition according to Claim 1, 2 or 3, characterized in that the composition has a pore volume greater than 1 cm³ g⁻¹.

5. Process for preparing a composition comprising an electrically conductive polymer chosen from polypyrrole and/or substituted polypyrrole by chemical polymerization of pyrrole and/or of substituted pyrrole in an aqueous reaction medium, characterized in that the reaction medium comprises an ionic compound containing an alkyl sulphate group, the alkyl being a saturated aliphatic chain, branched or otherwise and containing 8 carbon atoms.

6. Process according to Claim 5, characterized in the the compound containing an alkyl sulphate group which is used is a salt such as an alkali or alkaline-earth metal salt, a phosphonium salt, an ammonium salt or an amine derivative.

7. Process according to Claim 6, characterized in that the salt used is sodium 2-ethylhexylsulphate.

8. Process according to Claims 5 to 7, characterized in that the reaction medium additionally comprises a ferric salt such as ferric chloride.

## Patentansprüche

1. Zusammensetzung umfassend ein elektrisch leitfähiges Polymer, ausgewählt aus Polypyrrol und/oder substituiertem Polypyrrol, und ionische Gruppen, dadurch gekennzeichnet, daß die ionischen Gruppen mindestens eine Alkylsulfatgruppe aufweisen, wobei der Alkylrest eine verzweigte oder unverzweigte, gesättigte, aliphatische Kette ist und acht Kohlenstoffatome umfaßt.

2. Zusammensetzung nach Anspruch 1, dadurch gekennzeichnet, daß die Alkylsulfatgruppe eine 2-Ethylhexylsulfatgruppe ist.

3. Zusammensetzung nach Anspruch 1 oder 2, dadurch gekennzeichnet, daß die ionischen Gruppen weiterhin eine Chlorgruppe enthalten.

4. Zusammensetzung nach Anspruch 1, 2 oder 3, dadurch gekennzeichnet, daß die Zusammensetzung ein Porenvolumen besitzt, das größer als 1 cm³ g⁻¹ ist.

5. Verfahren zur Herstellung einer Zusammensetzung umfassend ein elektrisch leitfähiges Polymer ausgewählt aus Polypyrrol und/oder substituiertem Polypyrrol durch chemische Polymerisation von Pyrrol und/oder substituiertem Pyrrol in einem wässrigen Reaktionsmedium, dadurch gekennzeichnet, daß das Reaktionsmedium eine ionische Verbindung umfaßt, die eine Alkylsulfatgruppe aufweist, wobei der Alkylrest eine verzweigte oder unverzweigte, gesättigte, aliphatische Kette ist und acht Kohlenstoffatome umfaßt.

6. Verfahren nach Anspruch 5, dadurch gekennzeichnet, daß die verwendete Verbindung, die eine Alkylsulfatgruppe aufweist, ein Salz ist, beispielsweise ein Salz eines Alkali- oder Erdalkalimetalls, ein Phosphoniumsalz, ein Ammoniumsalz oder ein von einem Amin abgeleitetes Salz.

7. Verfahren nach Anspruch 6, dadurch gekennzeichnet, daß das verwendete Salz das Natriumsalz von 2-Ethylhexylsulfat ist.

8. Verfahren nach Ansprüchen 5 bis 7, dadurch gekennzeichnet, daß das Reaktionsmedium weiterhin ein Eisen(III)-salz, beispielsweise Eisen(III)-chlorid, umfaßt.
